Europäisches Patentamt

(19) European Patent Office

Office européen des brevets

(11) Publication number: **0 123 960**
**B1**

(12) **EUROPEAN PATENT SPECIFICATION**

(45) Date of publication of patent specification: **15.10.86**

(21) Application number: **84103767.4**

(22) Date of filing: **05.04.84**

(51) Int. Cl.⁴: **H 01 M 8/24,** H 01 M 2/08,
C 08 K 3/34 // C08F14/26

(54) **Fuel cell assembly with silicon carbide shims and method of making such shims.**

(30) Priority: **06.04.83 US 482427**

(43) Date of publication of application:
**07.11.84 Bulletin 84/45**

(45) Publication of the grant of the patent:
**15.10.86 Bulletin 86/42**

(84) Designated Contracting States:
**DE FR GB IT**

(56) References cited:
**DE-A-2 604 394**
**FR-A-2 513 818**
**US-A-4 259 389**

(73) Proprietor: **Energy Research Corporation**
**3 Great Pasture Road**
**Danbury Connecticut 06810 (US)**

(72) Inventor: **Chi, Chang Vum**
**118 Pocono Road**
**Brookfield Connecticut 06804 (US)**
Inventor: **Kush, Ashok Kumar**
**68 Rolling Wood Drive**
**Stamford Connecticut 06905 (US)**

(74) Representative: **Abitz, Walter, Dr.-Ing. et al**
**Abitz, Morf, Gritschneder P.O. Box 86 01 09**
**D-8000 München 86 (DE)**

Courier Press, Leamington Spa, England.

## Description

This invention relates to fuel cell assemblies.

In one type of fuel cell construction (FR—A—2 513 818), a matrix containing the fuel cell electrolyte is sandwiched between first and second electrodes of the cell. The electrodes, in turn, are sandwiched between top and bottom plates which are provided with channels for carrying process gas to the cell.

In this type of cell construction, the first and second electrodes may be made of shorter longitudinal and lateral dimension, respectively, than the matrix so that first and second longitudinal portions and first and second lateral portions of the matrix extend beyond the first and second electrodes, respectively. In such case, in order to realize proper sandwiching of the assembly, first and second shims are situated at the longitudinal ends of the first electrode overlapping the first and second longitudinal portions of the matrix and third and fourth shims are situated at the lateral ends of the second electrode overlapping the first and second lateral portions of the matrix.

The shims provided for this purpose have heretofore been made of Kynol® or Teflon®. Shims made of Kynol®, however, have large pores and, as a result, are prone to electrolyte leakage and, therefore, process gas leakage. Moreover, shims of Kynol® material are likely to tear and to degrade with increased temperature. Teflon® shims, on other hand, are hydrophobic in character and thus create a dry seal which due to its dry nature is also prone to electrolyte leakage and, therefore, gas leakage. Teflon® furthermore is subject to creep or shrinkage over time, which also can contribute to gas and electrolyte leakage. Finally, Teflon® has little resiliency or give and, hence, when squeezed between adjoining cell members may not conform to their surface irregularities, thereby leaving gaps for the escape of gas and electrolyte.

In another type of fuel cell construction, instead of utilizing shortened electrodes and independent integral member or shims adjacent the electrodes to provide sealing, the edges of the electrodes are themselves coated or impregnated with a prepared sealant material. Such a construction is disclosed in US—A—4 259 389.

It is disclosed therein that the sealant material used for coating or impregnating the electrode edge may be a silicon carbide powder bonded together with about a 2 percent binder of Teflon® or other polytetrafluoroethylene material to hold the powdered material in its compacted condition. It is also stated that carbon or graphite may be used in conjunction with or instead of silicon carbide powder or other materials inert to the electrolyte. Finally, coating or impregnating may be realized by mixing the sealant material particles, with the binder particles therein, in a suitable slurry, then dipping the edges of the electrode substrate to the right depth in the slurry and then drying the edges. As an alternative procedure it is proposed to apply the mixture of sealant powder and binder in a suitable vehicle such as water by the silk screen process.

The sealant material particles are, therefore, used as a filler to the existing pores of the electrode substrate. As a result, some areas of the sealed electrode edges will be more densely packed with sealant particles than others, owing to the inherent pore distribution of the substrate. This non-uniform distribution of the sealant particles, causes a difference in resiliency and strength over the seal region and also results in a non-uniform retention of electrolyte. These effects are further aggravated by the size distribution of the sealant material particles. The net result is thus a non-uniform and less than totally effective seal. Furthermore, the dipping and screening methods described for application of the sealant material require the handling of large and often fragile substrates and, moreover, such handling must be carefully carried out to control application for sealant to a small fraction of the total area of the substrates. The overall process is thus slow and prone to substrate damage.

The invention as claimed in claim 1 solves the problems of how to design a fuel cell assembly with retarded leakage of electrolyte and process gases.

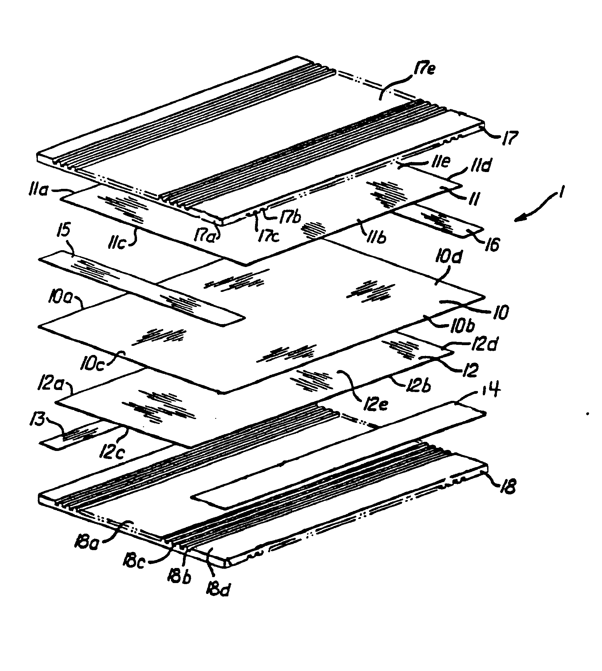

One embodiment of the invention is described below in detail in conjunction with the accompanying sole drawing which shows a fuel cell having shims in accordance with the principles of the present invention.

Detailed Description

In the figure, the fuel cell 1 comprises an electrolyte matrix 10 which is sandwiched between first and second electrodes 11 and 12 having sides 11a—11d and 12a—12d and being of smaller longitudinal and lateral dimension, respectively, than the matrix. Integral independent plates or shims 13 and 14 border the lateral edges 12a and 12b of the electrode 12 and sandwich or overlap the lateral matrix sections 10a, 10b extending therebeyond. Similarly, additional plates or shims 15 and 16 border the longitudinal edges 11c and 11d of the electrode 11 and sandwich extending matrix sections 10c and 10d.

Bipolar plates 17 and 18, in turn, abut the electrodes 11 and 12, respectively, and the shims 13—16 and sandwich these elements and the matrix 10. The plates 17 and 18 define with the electrodes passages or channels for carrying process gases. In particular, the lower surface 17a of the plate 17 includes a plurality of grooves 17b which define with the interior region 11e of the electrode 11 a first set of process channels 17c. Similarly, the interior region 12e of the electrode 12 cooperates with grooves 18b in the upper surface 18a of the plate 18 to define a second set of process gas channels 18c, these channels being crisscross to the channels 17c.

In order to prevent leakage of process gases and electrolyte from the cell 1, the shims 13—16, which are unitary structures separable from the electrodes 11 and 12, must be of appropriate construction. In accordance with the principles of the present invention, the shims are each formed from silicon carbide which is present in each shim in an amount of at least about 50 percent by weight. The shims also include a binder material for the silicon carbide which is present in an amount equal to or less than about 50 percent by weight and which, preferably, is Teflon®. A preferable constituent makeup for each shim is an amount of silicon carbide of at least about 90 percent by weight. A more preferable constituent makeup is at least about 93 percent silicon carbide, in which case the amount of Teflon® binder is equal to or less than about 7 percent by weight.

With the shims 13—16 formed as aforesaid, a more uniform distribution of silicon carbide pores is found to result and this acts to more effectively retard the outflow of electrolyte and process gases from the cell. The level of electrolyte in the cell is, therefore, maintained. This, in turn, preserves cell performance and inhibits the crossover of reactant gases which otherwise could result in cell failure.

Additionally, the shims now exhibit a more uniform resiliency and strength which enables them to better conform to the irregularities in the abutting surfaces of adjacent elements of the cell 1. This more effectively prevents the occurrence of possible through gaps, thereby further ensuring against leakage. Also, the shims undergo relatively little creepage with time and the seal provided is a wet seal and, therefore, possesses the usual advantages of such a seal as compared to a dry seal.

The silicon carbide shims of the invention are further advantageous in that as integral independent elements they can be fabricated by a continuous rolling process. Such a process permits ready realization of desired mechanical strength and thickness and enables mass production at very low cost. The resultant shims, moreover, being much smaller than an electrode substrate, are much easier to handle.

In making the shims, the mixture of silicon carbide and binder is continuously rolled to form a sheet of desired thickness. The sheet is then cut into pieces and the pieces sintered to form the desired shims. Sintering temperatures in a range of 290 degrees °C to 360 degrees °C are usable for mixtures containing silicon carbide and Teflon® binder in the ranges of about 98 to 91 percent by weight and about 2 to 9 percent by weight, respectively. A useable range of sintering times for the aforesaid range of sintering temperatures is about 1-20 minutes. A preferable range of sintering temperatures for a mixture of about 93 percent silicon carbide and 7 percent Teflon® is about 325—330 degrees °C. Sintering time for the aforesaid sintering temperatures is about 2 minutes.

In all cases, it is understood that the abovedescribed arrangements are merely illustrative of the many possible specific embodiments which represent applications of the present invention.

Thus, for example, the longitudinal and lateral dimensions of the electrolyte matrix 10 could also have been shortened to the same extent as the shortened dimensions of the electrodes 11 and 12. In such case, instead of overlapping the matrix edges, the shims 13—16 would be placed with their edges adjacent and abutting the matrix edges so as to provide the desired sealing effect. Moreover, the thickness of the shims would be made to accommodate the thickness of the matrix as well as the electrode.

## Claims

1. A fuel cell assembly comprising:
first and second electrodes;
a matrix for carrying electrolyte sandwiched between said electrodes, said matrix having a peripheral area extending beyond said electrodes;
first and second process gas plates sandwiching said matrix and said electrodes;
and independent shims sealing said peripheral area, characterized in that each said shim is integral and comprises silicon carbide in an amount of at least about 50 percent by weight.

2. A fuel cell assembly in accordance with claim 1 wherein: said shims contains a binder in an amount equal to or less than about 50 percent by weight.

3. A fuel cell assembly in accordance with claim 2 wherein: said binder is polytetrafluoroethylene.

4. A fuel cell assembly in accordance with claim 3 wherein: said silicon carbide is present in an amount of about 93 percent by weight and said polytetrafluoroethylene in an amount of about 7 percent by weight.

5. A fuel cell in accordance with claim 1 wherein: said silicon carbide is present in said shims in an amount of about at least 90 percent by weight.

6. A fuel cell in accordance with claim 1 wherein: said peripheral area extends around the entire circumference of said matrix.

7. A fuel cell in accordance with claim 1 wherein: said plates sandwich said peripheral area.

8. A fuel cell in accordance with claim 1 wherein:
said first and second electrodes are each four sided;
said matrix is four sided and said peripheral area of said matrix comprises first and second peripheral portions bordering the first and second sides of said matrix and extending beyond the first and second lateral sides of said second electrode and third and fourth peripheral portions bordering the third and fourth sides of said matrix and extending beyond the first and second longitudinal sides of said first electrode;
and said shims comprise first and second shims overlapping said first and second peripheral matrix portions and third and fourth shims overlapping said third and fourth peripheral matrix portions.

9. A fuel cell in accordance with claim 8 wherein:
said first and second shims are disposed between said second plate and said first and second peripheral matrix positions, respectively;

and said third and fourth shims are disposed between said first plate and said third and fourth peripheral matrix portions, respectively.

10. A fuel cell in accordance with claim 8 wherein:

said first and second shims abut the first and second lateral sides of said second electrode;

and said third and fourth shims abut the first and second longitudinal sides of said first electrode.

11. A fuel cell in accordance with claim 8 wherein: said electrodes, matrix and plates are rectangular.

## Patentansprüche

1. Brennstoffzellenanordnung mit
ersten und zweiten Elektroden;
einer Matrix, die Elektrolyt geschichtet zwischen den Elektroden trägt und einen Randbereich aufweist, der sich über die Elektroden hinaus erstreckt;
erste und zweite Verfahrensgas-Platten, die die Matrix und die Elektroden geschichtet halten;
und unabhängige Einlegestücke, die den Randbereich abdichten, dadurch gekennzeichnet, daß jedes Einlegestück einstückig ist und Siliciumcarbit in einer Menge von wenigstens etwa 50 Gew.-% enthält.

2. Brennstoffzellenanordnung nach Anspruch 1, wobei die Einlegestücke ein Bindemittel in einer Menge von gleich oder weniger als etwa 50 Gew-°% enthalten.

3. Brennstoffzellenanordnung nach Anspruch 2, wobei: ddas Bindemittel Polytetrafluoräthylen ist.

4. Brennstoffzellenanordnung nach Anspruch 3, wobei: das Siliciumcarbit in einer Menge von etwa 93 Gew-% und das Polytetrafluoräthylen in einer Menge von etwa 7 Gew.-% vorlieght.

5. Brennstoffzelle nach Anspruch 1, wobei: das Siliciumcarbit in den Einlegestücken in einer Menge von wenigstens etwa 90 Gew.-% vorliegt.

6. Brennstoffzelle nach Anspruch 1, wobei sich der Randbereich um den gesamten Umfang der Matrix erstreckt.

7. Brennstoffzelle nach Anspruch 1, wobei die Platten den Randbereich einklemmen.

8. Brennstoffzelle nach Anspruch 1, wobei
die erste und zweite Elektrode jeweils vierseitig sind;
die Matrix vierseitig ist und die Randabschnitte der Matrix erste und zweite Randabschnitte aufweist, die an die erste und zweite Seite der Matrix angrenzen und sich über dem ersten und zweiten Seitenrand der zweiten Elektrode und dritte und vierte Randsbschnitte hinaus erstrecken, die an die dritte und vierte Seite der Matrix angrenzen und sich über die ersten und zweiten Längsseiten der ersten Elektrode hinaus erstrecken;
und die Einlegestücke erste und zweite Einlegestücke sind, die den ersten und zweiten Randabschnitt der Matrix überlappen sowie dritte und vierte Einlegestücke, die die dritten und vierten Randabschnitte der Matrix überlappen.

9. Brennstoffzelle nach Anspruch 8, wobei

die ersten und zweiten Einlegestücke zwischen der zweiten Platte und dem ersten bzw. dem zweiten Randabschnitt der Matrix angeordnet sind;
und die dritten und vierten Einlegestücke zwischen der ersten Platte und dem dritten bzw. vierten Randabschnitt der Matrix angeordnet sind.

10. Brennstoffzelle nach Anspruch 8, wobei
die ersten und zweiten Randabschnitte an den ersten und zweiten Seitenrändern der zweite Elektrode anstoßen;
und die dritten und vierten Einlegestücke an den ersten und zweiten Seitenrändern der ersten Elektrode anstoßen.

11. Brennstoffzelle nach Anspruch 8, wobei die Elektrode, die Matrix und die Platten rechteckig sind.

## Revendications

1. Ensemble de pile à combustible comprenant:
une première et une second électrodes, une matrice pour acheminer l'électrolyte, prise en sandwich entre lesdites électrodes, ladite matrice ayant une aire périphérique s'étendant au-delà desdites électrodes;
une première et une seconde plaques de gaz de traitement prenant ladite matrice et lesdites électrodes en sandwich;
et des cales indépendantes assurant l'étanchéité desdites aires périphériques, caractérisé en ce que chacune desdites cales est monolithique et est constituée de carbure de silicium dans une quantité d'au moins environ 50% en poids.

2. Ensemble de pile à combustible suivant la revendication 1, dans lequel lesdites cales contiennent un liant dans une proportion égale ou inférieure à environ 50% en poids.

3. Ensemble de pile à combustible suivant la revendication 2, dans lequel ledit liant est du polytétrafluoroéthylène.

4. Ensemble de pile à combustible suivant la revendication 3, dans lequel le carbure de silicium est présent dans une proportion d'environ 93% en poids et ledit polytétrafluoroéthylène dans une proportion d'environ 7% en poids.

5. Pile à combustible suivant la revendication 1, dans laquelle ledit carbure de silicium est présent dans lesdites cales dans une proportion d'au moins 90% en poids.

6. Pile à combustible suivant la revendication 1, dans laquelle ladite aire périphérique s'étand autour de la totalité de la circonférence de ladite matrice.

7. Pile à combustible suivant la revendication 1, dans laquelle lesdites plaques prennent chacune en sandwich ladite aire périphérique.

8. Pile à combustible suivant la revendication 1, dans laquelle lesdites premières et secondes électrodes ont chacune quatre côtés, ladite matrice présentant quatre cotés, et ladite aire périphérique de ladite matrice comprend une première et une seconde portions périphériques bordant les premiers et seconds côtés de ladite matrice et s'étendant au-delà des premiers et seconds côtés latéraux de ladite seconde électrode et les troisième et quatrième portions périphériques bordant les troisième et quatrième côtés de ladite matrice et s'étendant au-delà du premier et du second côtés longitudinaux de ladite première électrode, et lesdites cales comprenant une première et une seconde cales recouvrant lesdites première et seconde portions périphériques de matrice.

9. Pile à combustible suivant la revendication 8, dans laquelle lesdites première et seconde cales sont disposées entre ladite seconde plaque et lesdites première et seconde portions périphériques de la matrice respectivement, et lesdites troisième et quatrième cales étant disposées entre ladite première plaque et lesdites troisième et quatrième portions périphériques de la matrice respectivement.

10. Pile à combustible suivant la revendication 8, dans laquelle lesdites première et seconde cales sont en butée contre les premier et second côtés latéraux de ladite seconde électrode, lesdites troisième et quatrième cales étant en butée contre les premier et second côtés longitudinaux de ladite première électrode.

11. Pile à combustible suivant la revendication 8, dans laquelle lesdites électrodes, la matrice et les plaques sont rectangulaires.

0 123 960

1